(19) Europäisches Patentamt

European Patent Office

Office européen des brevets

(11) **EP 1 731 887 A1**

(12) **EUROPEAN PATENT APPLICATION**

(43) Date of publication:
**13.12.2006 Bulletin 2006/50**

(51) Int Cl.:
***G01J 3/28*** (2006.01)

(21) Application number: **06011763.7**

(22) Date of filing: **07.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.06.2005 JP 2005169385**

(71) Applicant: **Yokogawa Electric Corporation Tokyo 180-8750 (JP)**

(72) Inventors:
- **Fujita, Tadashige**
  **Musashino-shi**
  **Tokyo 180-8750 (JP)**
- **Suzuki, Yasuyuki**
  **Musashino-shi**
  **Tokyo 180-8750 (JP)**

- **Kamei, Shin**
  **Musashino-shi**
  **Tokyo 180-8750 (JP)**
- **Yakihara, Tsuyoshi**
  **Musashino-shi**
  **Tokyo 180-8750 (JP)**
- **Wada, Morio**
  **Musashino-shi**
  **Tokyo 180-8750 (JP)**
- **Miura, Akira**
  **Musashino-shi**
  **Tokyo 180-8750 (JP)**

(74) Representative: **Grünecker, Kinkeldey, Stockmair & Schwanhäusser Anwaltssozietät Maximilianstrasse 58 80538 München (DE)**

(54) **Photodiode array**

(57)    A photodiode array for entering incident light a spectroscope device equipped with a wavelength dispersion element and detecting light emanating from the spectroscope device. The arrangement of each of photodiode elements constituting the photodiode array is displaced.

# FIG. 1

EP 1 731 887 A1

**Description**

BACKGROUND OF THE INVENTION

This invention relates to a photodiode array (hereinafter simply referred to as a PD array) which is employed in a spectroscope device using a wavelength dispersion element and preferably applied to monitoring of light power.

The following Patent Reference discloses a technique for receiving, by a PD array, light beams wavelength-dispersed when a diffracting element serving as a wavelength dispersion element is irradiated with incident light and detecting the light beams separated according to wavelengths.

[Patent Reference 1] JP-A-2004-138515

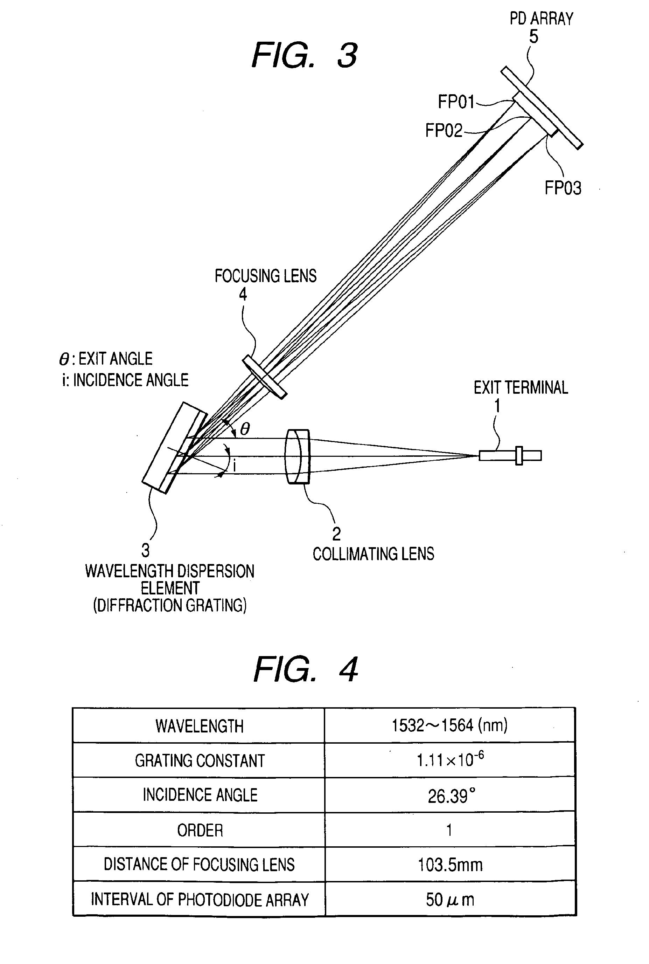

Fig. 3 is an arrangement view showing an example of the spectroscope device using the PD array as a detecting element. In Fig. 3, reference numeral 1 denotes an exit terminal from which light from a light source or light from an optical fiber exits; 2 a collimating lens; 3 a wavelength dispersion element such as a diffraction grating; 4 a focusing lens; and 5 a PD array.

The light exiting from the exit terminal 1 is converted into parallel light beams by the collimating lens 2. The parallel light beams are incident on the wavelength dispersion element 3. The light beams wavelength-dispersed from the wavelength dispersion element 3 are focused by the focusing lens 4 and incident on the PD array 5.

The light beams incident on the diffraction grating 3 have different diffraction angles according their wavelengths so that they emanate as diffracted light beams in different directions, and are focused on the PD array 5 by the focusing lens 4.

In Fig. 3, the light beams having different wavelengths are focused at positions of "FPO1", "FPO2" and "FP03" on the PD array 5. Such a spectroscope device is excellent in high speed and reliability because it is not necessary to rotate the diffraction grating 3.

For example, assuming that the order of diffraction in the diffraction grating 3 is $\underline{m}$, the grating constant is $\underline{d}$, the incident angle to the diffraction grating 3 is $\underline{i}$, the exit angle therefrom is $\theta$ and the wavelength is $\lambda$,

$$m\lambda/d = \sin i + \sin \theta \qquad (1)$$

Where the spectroscope device as shown in Fig. 3 is designed to deal with a narrow wavelength range as in a WDM (Wavelength Division Multiplexing) transmission system monitoring device, the extension of the optical path due to the wavelength dispersion becomes small as compared with the focal distance of the focusing lens 4. Thus, the position of each of the elements when using the PD array 5 in one-dimensional arrangement is nearly proportional to the exit angle.

It should be noted that the relationship between the wavelength and the exit angle is obtained by differentiating Equation (1) is expressed by

$$d\lambda/d\theta|i = (d/m)\cdot\cos\theta \qquad (2)$$

As understood from Equation (2), the wavelength and diffraction angle are proportional to the cosine of the exit angle. This exit angle can be acquired from Equation (1) using the wavelength range of the spectroscope device, grating constant of the diffraction grating 3 used, focal distance of the focusing lens 4.

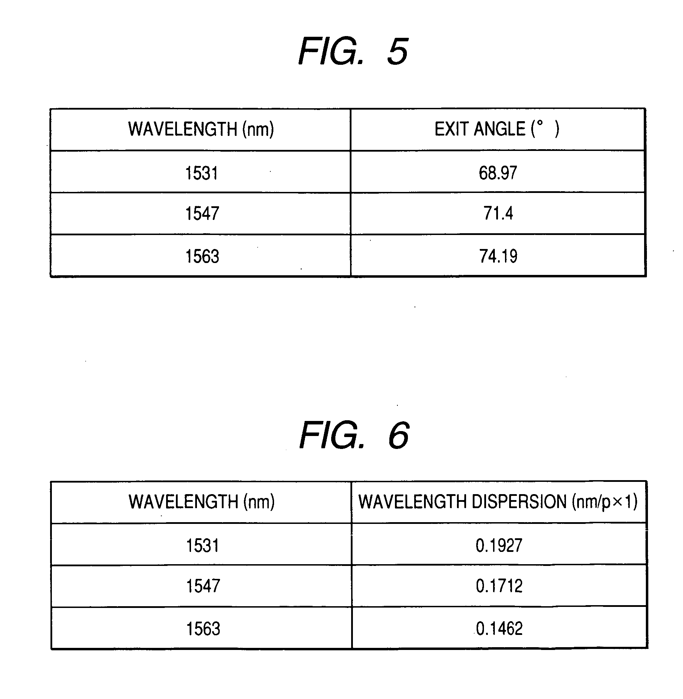

Fig. 4 is a table showing an example of design of such a spectroscope device. Fig. 5 is a table showing the exit angle corresponding to each wavelength. In this case, for example, in a assuming that $\lambda = 1.55 \mu m$, the number of grooves is 900/mm, the wavelength range is 32 nm and the light receiving elements (PD) array has 190 elements, the average wavelength dispersion is 32/190 = about 0.17 nm.

Meanwhile, if the wavelength dispersion of the actual wavelengths from Equation (2) using the table shown in Fig. 4 is computed, the result as shown in Fig. 6 is obtained. Fig. 6 is a table showing the relationship between the wavelength and the wavelength dispersion. As understood from Fig. 6, the wavelength dispersion for the wavelength of 1531 nm is 0.1927 nm for a single light receiving element (PD) constituting the PD array 5; and the wavelength dispersion for the wavelength of 1563 nm is 0.1462 nm for a single light receiving element (PD) constituting the PD array 5. In this way, the wavelength dispersion depends on the wavelength.

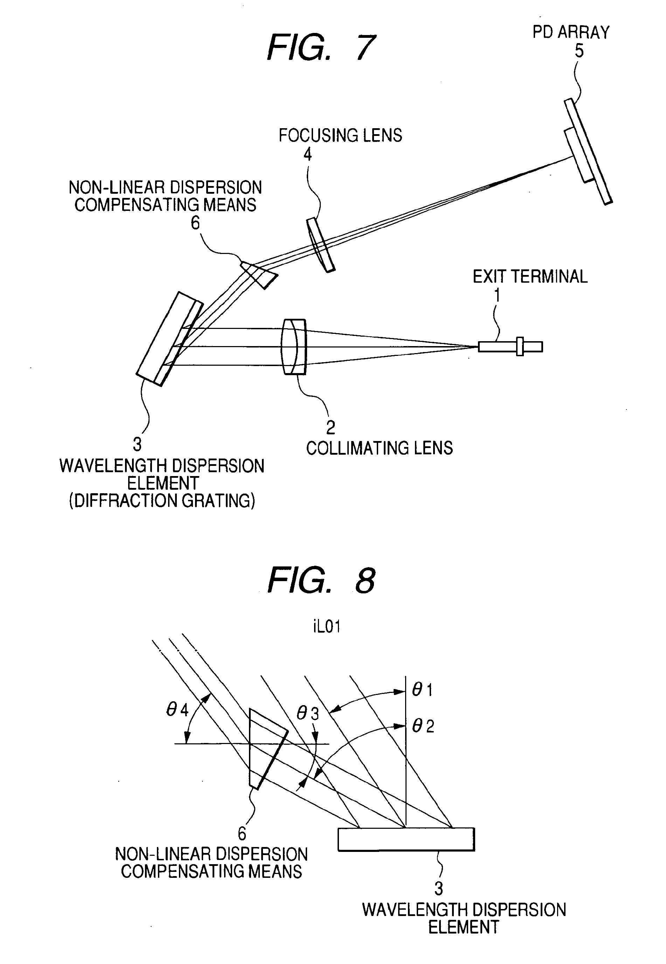

Fig. 7 is an arrangement view of the spectroscope device with the above dependency being improved. In Fig. 7, reference numerals 1, 2, 3, 4 and 5 refer to like components in Fig. 3. Reference numeral 6 denotes a non-linear dispersion compensating means such as a prism.

The light exiting from the exit terminal 1 is converted into parallel light beams by the collimating lens 2. The parallel light beams are incident on the diffraction grating 3. The diffracted light beams emanated from the diffraction grating 3 are focused by the focusing lens 4 through the non-linear dispersion compensating means 6 and are incident on the PD array 5.

Fig. 8 is a view for explaining the optical path in the wavelength dispersion element 3 and non-linear dispersion compensating means 6. The basic operation, which is the same as in Fig. 3, will not be explained.

Equation (2) can be transformed in

$$d\lambda \ = \ (d/m) \cdot \cos\theta \cdot d\theta \tag{3}$$

If the light receiving elements constituting the PD array 5 are arranged at regular intervals, unevenness occurs in the wavelength dispersion owing to the cosine component ($\cos\theta$).

In other words, non-linearity exists.

On the other hand, assuming that the refraction indexes of media is n1 and n2, and the incidence angle and exit angle are $\phi$ and $\psi$, Equation relative to refraction is expressed as

$$n1 \cdot \sin\phi \ = \ n2 \cdot \sin\psi \tag{4}$$

By differentiating Equation (4) by $\phi$,

$$n1 \cdot \cos\phi \cdot d\phi \ = \ n2 \cdot \cos\psi \cdot d\psi \tag{5}$$

As understood from Equation (5), the refraction angle depends on the cosine component. For this reason, it is possible to compensate for the non-linearity due to the cosine component of the exit angle of the wavelength dispersion element 3 using the non-linearity of the cosine component of refraction (non-linear dispersion compensating means 6).

In Fig. 8, assuming that the incidence angle and exit angle of the wavelength dispersion element 3 are θ1 and θ2, respectively; the incidence angle and exit angle of the non-linear dispersion compensating means 6 are θ3 and θ4, respectively, the refraction index of the non-linear dispersion compensating means 6 is n and the wavelength is λ,

$$\sin\theta1 \ + \ \sin\theta2 \ = \ \lambda/d \tag{6}$$

$$(1/n) \cdot (d\theta2/d\lambda) \ = \ -d\theta3/d\lambda \tag{7}$$

$$n \cdot \sin\theta3 \ = \ \sin\theta4 \tag{8}$$

By differentiating Equation (6) to Equation (8) and organizing them, the average wavelength dispersion can be obtained, thus giving

$$d\theta4/d\lambda \ = \ \cos\theta3/(d \cdot \cos\theta2 \cdot \cos\theta4) \tag{9}$$

By transforming Equation (9),

$$d2\theta4/d\lambda2 = (d\theta4/d\lambda)2$$

$$x\{sin\theta4/cos\theta4$$

$$-(sin\theta2\cdot cos\theta4)/(sin\theta2\cdot cos\theta3)$$

$$-(sin\theta3\cdot cos\theta4)/(n\cdot cos2\theta3)\} \qquad (10)$$

In order that this characteristic is linear, d2θ4/dλ2 = 0. So, by transforming Equation (10), tanθ3/(1-n2·sin2θ3)

$$= n\cdot tan\theta2/(n2-1) \qquad (11)$$

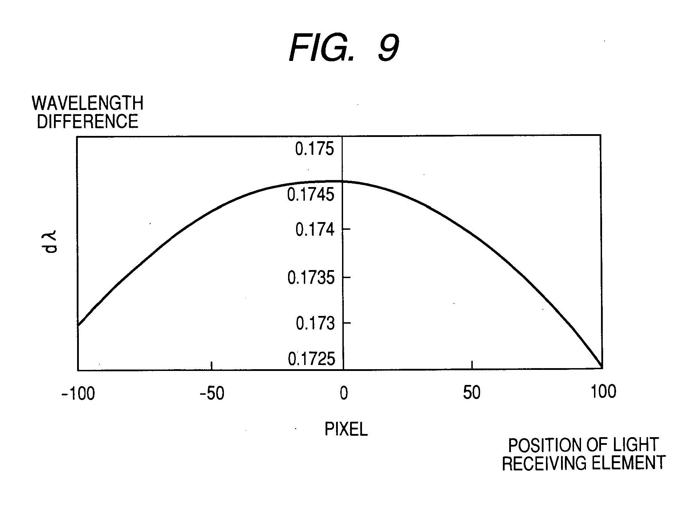

If the wavelength dispersion characteristic is computed using Equation (9) on the basis of the following condition, the result as shown in Fig. 9 is obtained. Fig. 9 is a characteristic curve graph showing the wavelength difference relative to the position of the light receiving element.

    (a) number of elements used in the PD array 5 about 180
    (b) interval between the elements in the PD array 5 50 nm
    (c) focal distance of the focusing lens 103.5 mm
    (d) wavelength range used 1532 to 1564 nm
    (e) incidence angle of the diffraction grating 31.22°
    (f) exit angle of the diffraction grating 61°
    (g) number of lines of the diffraction grating 900/mm
    (h) incidence angle of the prism 33. 5643°
    (i) exit angle of the prism 56°
    (j) refractive index 1.5

As understood from Fig. 9, the wavelength error between the adjacent light receiving elements is within a range from 0.173 to 0.1745, thereby giving a more flat characteristic than that shown in Fig. 6.

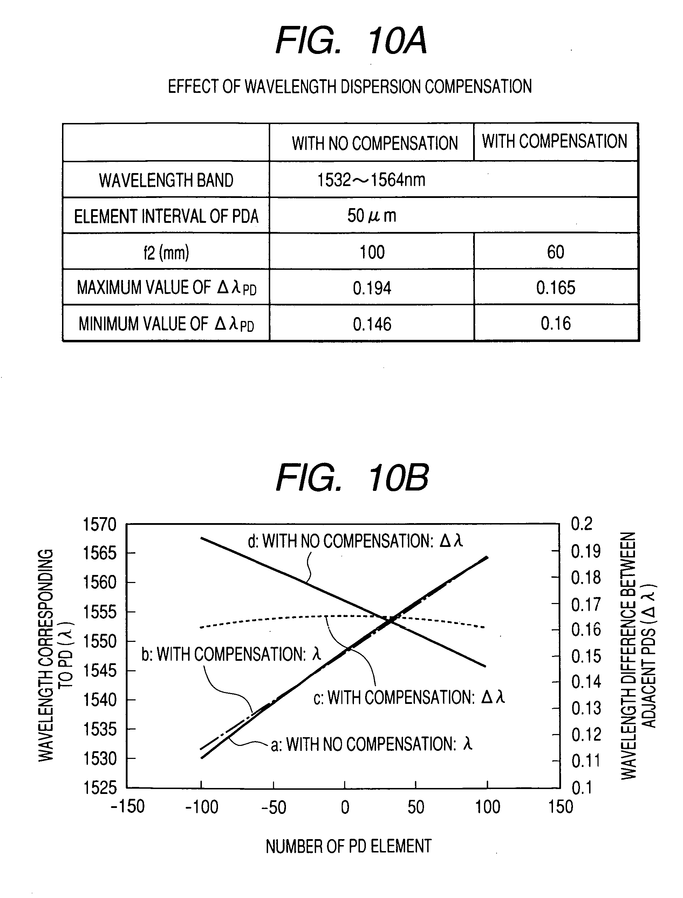

Figs. 10A and 10B exhibit the effect of the wavelength dispersion compensating means in the configuration provided with the non-linear dispersion compensating means 6. Fig. 10B is a graph corresponding to Fig. 10A.

As seen from these graphs, the focal distance f2 of the focusing lens with no dispersion compensating means is changed from 100 mm to 60 mm, the maximum value of the wavelength difference ($\Delta\lambda$) between the adjacent PDs is improved from 0.194 $\mu$m to 0.165 $\mu$m, and the minimum value thereof is improved from 0.146 $\mu$m to 0.16 $\mu$m.

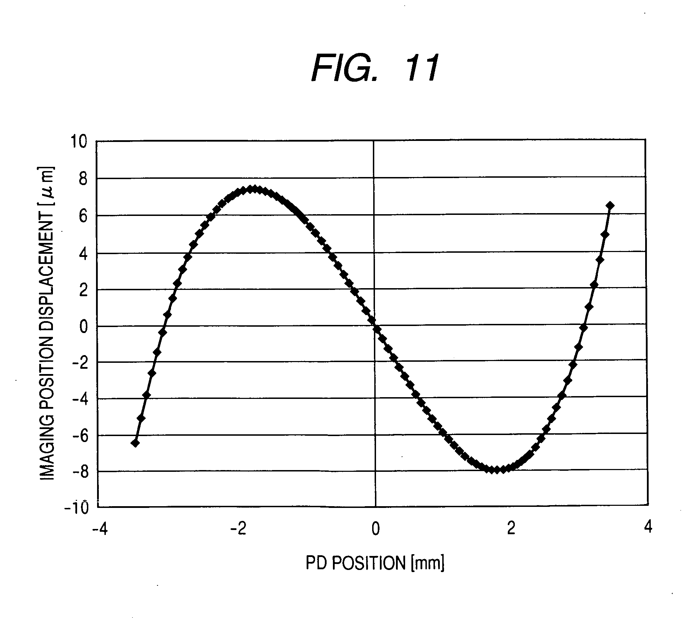

Meanwhile, the imaging position on the PD array is affected by the distortion characteristic of the focusing lens. Fig. 11 shows the displacement characteristic of the imaging position on the PD array in the configuration optimized under a certain condition. This figure illustrates the state where 88 PDs are arranged at a pitch of 80 $\mu$m.

Under the condition of an actual device, as seen from Fig. 11, the imaging position is displaced within a range of $\pm$ 8 $\mu$m. Therefore, the position accuracy relative to the pitch of the PDs is $\pm$ 10% and so sufficient alignment cannot be obtained therebetween.

SUMMARY OF THE INVENTION

Thus, an object of this invention is to provide a PD array in which each of elements thereof is arranged at a displaced position to be brought into alignment with an imaging position.

In order to attain the above object, according to aspect 1 of the present invention, there is provided with a photodiode array for detecting light which enters a spectroscope device including a wavelength dispersion element and emanates from the spectroscope device, including a plural of photodiode elements, and bonding pads corresponding to the respective photodiode elements, wherein each of the photodiode elements is displaced with respective to the corresponding bonding pad.

According to aspect 2 of the present invention, there is provided with the photodiode array according to aspect 1, wherein each of the photodiode elements is displaced in alignment with displacement of an imaging position due to a spectral characteristic of the spectroscope device.

According to aspect 3 of the present invention, there is provided with the photodiode array according to aspect 1 or 2, further including: a light shielding member provided between adjacent photodiode elements.

According to aspect 4 of the present invention, there is provided with the photodiode array according to aspect to 3, wherein each of the photodiode elements is displaced by changing the width of the light shielding member.

As apparent from the above description, this invention provides the following advantages.

In accordance with the inventions described in aspects 1 and 2, since the arrangement of each of photodiode elements is displaced in alignment with displacement of an imaging position due to the spectral characteristic, the flatness of the light receiving sensitivity owing to the wavelength of the spectroscope device can be realized.

In accordance with the invention described in aspect 3, since a light shielding member is provided between adjacent photodiode elements, it is possible to prevent the reduction of the extracting/responding speed of electrons excited at an electric field neutral point in the central area between the adjacent photodiode elements.

In accordance with the invention described in aspect 4, since the arrangement of each the photodiode elements is displaced by changing the width of the light shielding member, the shape of the light receiving window of each of the photodiode elements in the PD array is not changed, thereby preventing the light receiving characteristic from being changed.

BRIEF DESCRIPTION OF THE DRAWINGS

Fig. 1 is an enlarged view of the main part of an embodiment of the PD array according to this invention.

Fig. 2 is a view for explaining the technique for preventing the light receiving characteristic of each PD element from being changed when the arrangement of the PD elements is displaced.

Fig. 3 is an arrangement view showing an example of the spectroscope device to which this invention is applied.

Fig. 4 is a table showing an example of design of the spectroscope device.

Fig. 5 is a table showing the exit angle corresponding to each wavelength.

Fig. 6 is a table showing the relationship between a wavelength and wavelength dispersion.

Fig. 7 is an arrangement view of an example of the spectroscope device in which a non-linear dispersion compensating means is inserted.

Fig. 8 is a view for explaining the optical path in a wavelength dispersion element and a non-linear dispersion compensating means.

Fig. 9 is a characteristic curve graph showing the wavelength difference relative to the position of a light receiving element.

Figs. 10A and 10B are views showing the effect of the wavelength dispersion compensating means in the configuration provided with the non-linear dispersion compensating means.

Fig. 11 is a graph showing the displacement characteristic of the imaging position on the PD array in the configuration optimized under a certain condition.

DETAILED DESCRIPTION OF THE PREFERRED EMBODIMENTS

Now referring to the drawing, a detailed explanation will be given of this invention.

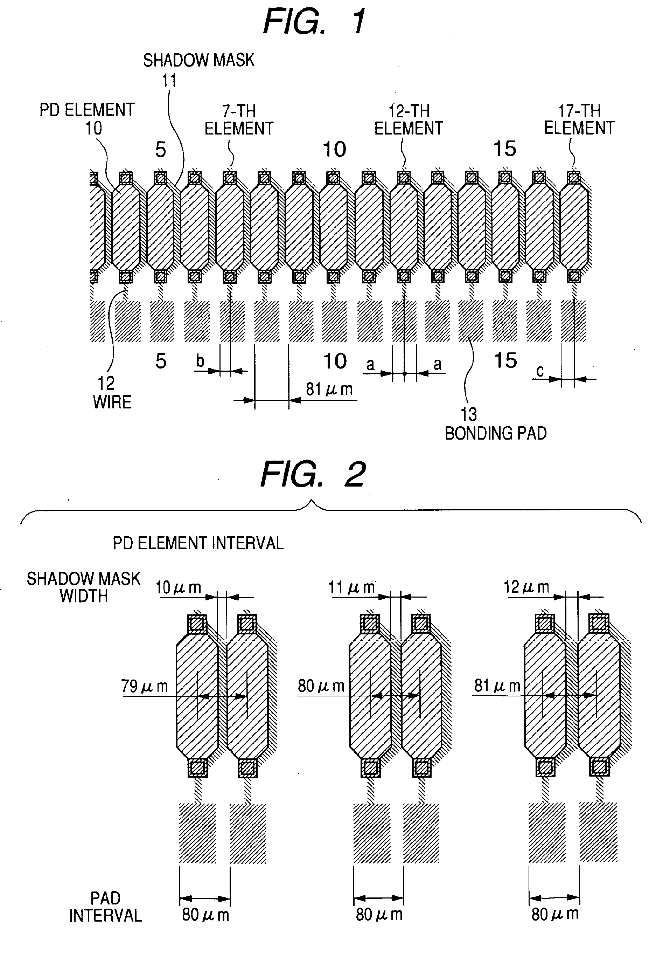

Fig. 1 is an enlarged plan view of the main part of an embodiment of the PD array according to this invention.

This figure illustrates an example of PDs arranged in alignment with the displacement of imaging position which could not be absorbed by the optical system of the spectroscope device. In an actual PD array chip, unlike the example shown in Fig. 11, 88 or more PDs are arranged. In order to clearly illustrate the displaced arrangement of the PDs, a part of the array chip is enlarged.

In Fig. 1, reference numeral 10 denotes one of PD elements formed in an array shape; 11 one of shadow masks between the adjacent PD elements; and 12 one of wires each connecting a bonding pad 13 and the PD element 10.

The enlarged part in Fig. 1 corresponds to the most leftward point of three points where the displacement of the imaging position is zero in Fig. 11. Numerals "5", "10" and "15" denote the numbers of the corresponding PD elements arranged in the array structure. In this example, the 12-th PD element gives zero displacement of the imaging position (the center of the PD element 10 and the corresponding bonding pad 13 agree with each other to provide equal distances "a" on both sides).

Generally, in such a PD array, in order that no hitch occurs in the mounting/assembling of the PD array chip, the bonding pads 13 are arranged at regular intervals (e.g. 80 $\mu$m). Therefore, the central positions of the bonding pad 13, PD element 10 and connecting wire 12 are displaced relatively.

In the example, the arrangement pitch of the PD elements is set at 81 $\mu$m in alignment with the displacement of the imaging position. Therefore, as seen from the figure, the PD elements before the 12-th PD element are displaced leftward (- side) from the corresponding bonding pads (for example, in the 7-th PD element, a > b); and the PD elements before the 12-th PD element are displaced rightward (+ side) from the corresponding bonding pads (for example, in the 17-th PD element, a < c).

Fig. 2 is a view for explaining the technique for preventing the light receiving characteristic of each PD element from being changed when the arrangement of each the PD elements is displaced.

In reading an output from the PD array at a high speed, it is problematic that an electric neutral point exists in the central area between the adjacent PD elements and in this area, the extracting/responding speed of excited electrons is low. In order to solve this problem, a shadow mask for interrupting light incidence between the PD elements is employed.

Further, in order to prevent the light receiving characteristic of each of the PD elements of the PD array from being changed, the respective light receiving portions of the PD elements must be formed in the same pattern. Therefore, by changing the width of the shadow mask 11, it is necessary to absorb the displacement in the arrangement of each the PD elements.

Fig. 2 illustrates an example in which the shadow mask width is changed with a pitch of 1 $\mu$m. As seen, by changing the width of the shadow mask in alignment with the displacement of the imaging position, the displacement from the imaging position can be placed within $\pm$ 0. 5 $\mu$m. In this way, by changing the shadow mask width more finely, the displacement between the PD position and the imaging position can be reduced.

In the configuration in which the size of imaging is much smaller than that of the PD element, the shadow mask is not required.

The above explanation has been only made with reference to specific preferred embodiments in order to explain and illustrate this invention.

Therefore, without being limited to the above embodiments, this invention can be changed or modified in various manners in a scope not departing from its essence.

**Claims**

1.  A photodiode array for detecting light which enters a spectroscope device including a wavelength dispersion element and emanates from the spectroscope device, comprising:

    a plural of photodiode elements, and
    bonding pads corresponding to the respective photodiode elements, wherein
    each of the photodiode elements is displaced with respect to the corresponding bonding pad.

2.  The photodiode array according to claim 1, wherein
    each of the photodiode elements is displaced in alignment with displacement of an imaging position due to a spectral characteristic of the spectroscope device.

3.  The photodiode array according to claim 1, further comprising:

    a light shielding member provided between adjacent photodiode elements.

4.  The photodiode array according to claim 3, wherein
    each of the photodiode elements is displaced by changing the width of the light shielding member.

5.  The photodiode array according to claim 2, further comprising:

    a light shielding member provided between adjacent photodiode elements.

6.  The photodiode array according to claim 5, wherein
    each of the photodiode elements is displaced by changing the width of the light shielding member.

# FIG. 1

SHADOW MASK
11

PD ELEMENT
10

7-TH
ELEMENT

12-TH
ELEMENT

17-TH
ELEMENT

5      10      15

5    b    10   a   a    15   c

81 μm

12
WIRE

13
BONDING PAD

# FIG. 2

PD ELEMENT INTERVAL

SHADOW MASK
WIDTH

10 μm       11 μm       12 μm

79 μm       80 μm       81 μm

PAD
INTERVAL    80 μm      80 μm      80 μm

# FIG. 3

PD ARRAY
5

FP01
FP02
FP03

FOCUSING LENS
4

θ: EXIT ANGLE
i: INCIDENCE ANGLE

θ

i

EXIT TERMINAL
1

3
WAVELENGTH DISPERSION
ELEMENT
(DIFFRACTION GRATING)

2
COLLIMATING LENS

# FIG. 4

| WAVELENGTH | 1532~1564 (nm) |
|---|---|
| GRATING CONSTANT | $1.11 \times 10^{-6}$ |
| INCIDENCE ANGLE | 26.39° |
| ORDER | 1 |
| DISTANCE OF FOCUSING LENS | 103.5mm |
| INTERVAL OF PHOTODIODE ARRAY | 50 μm |

## FIG. 5

| WAVELENGTH (nm) | EXIT ANGLE (° ) |
|---|---|
| 1531 | 68.97 |
| 1547 | 71.4 |
| 1563 | 74.19 |

## FIG. 6

| WAVELENGTH (nm) | WAVELENGTH DISPERSION (nm/p×1) |
|---|---|
| 1531 | 0.1927 |
| 1547 | 0.1712 |
| 1563 | 0.1462 |

# FIG. 7

PD ARRAY
5

FOCUSING LENS
4

NON-LINEAR DISPERSION
COMPENSATING MEANS
6

EXIT TERMINAL
1

2
COLLIMATING LENS

3
WAVELENGTH DISPERSION
ELEMENT
(DIFFRACTION GRATING)

# FIG. 8

iL01

$\theta 4$

$\theta 3$

$\theta 1$

$\theta 2$

6
NON-LINEAR DISPERSION
COMPENSATING MEANS

3
WAVELENGTH DISPERSION
ELEMENT

# *FIG. 9*

WAVELENGTH
DIFFERENCE

POSITION OF LIGHT
RECEIVING ELEMENT

# FIG. 10A

EFFECT OF WAVELENGTH DISPERSION COMPENSATION

|  | WITH NO COMPENSATION | WITH COMPENSATION |
|---|---|---|
| WAVELENGTH BAND | 1532～1564nm | |
| ELEMENT INTERVAL OF PDA | 50 $\mu$ m | |
| f2 (mm) | 100 | 60 |
| MAXIMUM VALUE OF $\Delta \lambda_{PD}$ | 0.194 | 0.165 |
| MINIMUM VALUE OF $\Delta \lambda_{PD}$ | 0.146 | 0.16 |

# FIG. 10B

d: WITH NO COMPENSATION: $\Delta \lambda$

b: WITH COMPENSATION: $\lambda$

c: WITH COMPENSATION: $\Delta \lambda$

a: WITH NO COMPENSATION: $\lambda$

WAVELENGTH CORRESPONDING TO PD ($\lambda$)

WAVELENGTH DIFFERENCE BETWEEN ADJACENT PDS ($\Delta \lambda$)

NUMBER OF PD ELEMENT

# FIG. 11

**European Patent
Office**

## EUROPEAN SEARCH REPORT

**Application Number**

EP 06 01 1763

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 428 270 A (ICS-TEXICON LIMITED) 22 May 1991 (1991-05-22) * abstract * * column 4, line 12 - column 5, line 20 * * column 8, line 10 - column 9, line 47 * * column 12, line 42 - line 59 * * figures 1,8,9 * ----- | 1-6 | INV. G01J3/28 |
| A | EP 1 156 311 A (NIPPON SHEET GLASS CO., LTD) 21 November 2001 (2001-11-21) * abstract * * paragraph [0036] * * figure 7 * ----- | 1-6 | |

TECHNICAL FIELDS
SEARCHED      (IPC)

G01J

The present search report has been drawn up for all claims

| Place of search | Date of completion of the search | Examiner |
|---|---|---|
| Munich | 11 September 2006 | Haller, Mirjam |

## ANNEX TO THE EUROPEAN SEARCH REPORT
## ON EUROPEAN PATENT APPLICATION NO.

EP 06 01 1763

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2006

| Patent document cited in search report | | Publication date | Patent family member(s) | | Publication date |
|---|---|---|---|---|---|
| EP 0428270 | A | 22-05-1991 | GB | 2237378 A | 01-05-1991 |
| | | | US | 5170222 A | 08-12-1992 |
| EP 1156311 | A | 21-11-2001 | CA | 2354267 A1 | 19-04-2001 |
| | | | CN | 1327532 A | 19-12-2001 |
| | | | WO | 0127573 A1 | 19-04-2001 |
| | | | TW | 477076 B | 21-02-2002 |
| | | | US | 7062178 B1 | 13-06-2006 |

EPO FORM P0459

For more details about this annex : see Official Journal of the European Patent Office, No. 12/82

**EP 1 731 887 A1**

## REFERENCES CITED IN THE DESCRIPTION

### Patent documents cited in the description

- JP 2004138515 A